# EUROPEAN PATENT APPLICATION

(11) **EP 3 251 743 A1**
(43) Date of publication of application: **06.12.2017**
(21) Application number: 17167439.3
(22) Date of filing: 21.04.2017
(51) Int. Cl.: B01J 21/06, B01J 27/20, B01J 29/08, B01J 29/06, B01J 29/40, B01J 35/00, B01J 37/34, C02F 1/00, A61L 9/00

(54) **PHOTOCATALYST PARTICLE, METHOD FOR DECOMPOSING ORGANIC COMPOUND CONTAINED IN ALKALINE AQUEOUS SOLUTION WITH THE SAME, AND METHOD FOR CONVERTING TOXIC IONS CONTAINED IN ALKALINE AQUEOUS SOLUTION INTO NON-TOXIC IONS**

(30) Priority: 02.06.2016 JP 2016110601
(71) Applicant: Panasonic Intellectual Property Management Co., Ltd., Osaka-shi, Osaka 540-6207 (JP)
(72) Inventor: HARA, Kohei, Osaka-shi, Osaka 540-6207 (JP); HASHIMOTO, Yasuhiro, Osaka-shi, Osaka 540-6207 (JP); INO, Daisuke, Osaka-shi, Osaka 540-6207 (JP)
(74) Representative: Grünecker Patent- und Rechtsanwälte PartG mbB

(57) **Abstract**

The present invention provides a photocatalyst particle comprising titanium dioxide particles, a zeolite particle, and a carbon layer. The titanium dioxide particles are adsorbed on a part of an external surface of the zeolite particle. The carbon layer coats a part of an external surface of the zeolite particle other than the part of the external surface of the zeolite particle on which the titanium dioxide particles are adsorbed. The carbon layer is in contact with a part of surfaces of the titanium dioxide particles. At least a part of the other part of the surfaces of the titanium dioxide particles is not coated with the carbon layer and are exposed on a surface of the photocatalyst particle. The present invention provides a photocatalyst particle used even in an alkaline aqueous solution.

## Description

### BACKGROUND

### 1. Technical Field

The present invention relates to a photocatalyst particle, a method for decomposing an organic compound contained in an alkaline aqueous solution with the same, and a method for converting toxic ions contained in an alkaline aqueous solution into non-toxic ions.

### 2. Description of Related Art

United States Patent No. 9,290,394 discloses a method for decomposing an organic compound contained in an aqueous solution.

United States Patent Application Publication No. 2014/0151302 discloses a method for treating an aqueous solution containing hexavalent chrome ions.

United States Patent Application Publication No. 2014/0151301 discloses a method for treating an aqueous solution containing arsenic.

Japanese Patent Unexamined Publication No. 2010-201327A discloses a photocatalytic coating film-formed body and a method for producing the same.

Japanese Patent Unexamined Publication No. 2002-177785A discloses a visible ray photoreaction type titanium oxide particle having a triple structure, a base material and a building material having a titanium oxide particle containing coating film and a manufacturing method thereof.

Japanese Patent Unexamined Publication No. 2005-307726A discloses a wall covering material with a zeolite layer on a surface and a wall covering material with a porous body layer on a surface

Hao Zhang et. al., "P25-Graphene Composite as a High Performance Photocatalyst" ACS NANO, Vol. 4, No. 1, pages 380-386 discloses activity improvement effect of a composite photocatalyst of carbon and titanium dioxide.

### SUMMARY

An object of the present invention is to provide a photocatalyst particle used even in an alkaline aqueous solution.

The present invention provides a photocatalyst particle, comprising:
titanium dioxide particles;
a zeolite particle; and
a carbon layer,
wherein
the titanium dioxide particles are adsorbed on a part of an external surface of the zeolite particle;
the carbon layer coats a part of an external surface of the zeolite particle other than the part of the external surface of the zeolite particle on which the titanium dioxide particles are adsorbed;
the carbon layer is in contact with a part of surfaces of the titanium dioxide particles; and
at least a part of the other part of the surfaces of the titanium dioxide particles is not coated with the carbon layer and are exposed on a surface of the photocatalyst particle.

The present invention also provides a method for decomposing an organic compound contained in an alkaline aqueous solution using the photocatalyst particle. The present invention further provides a method for converting toxic ions in an alkaline aqueous solution into non-toxic ions using the photocatalyst particle.

The present invention provides a photocatalyst particle used even in an alkaline aqueous solution.

### BRIEF DESCRIPTION OF THE DRAWING

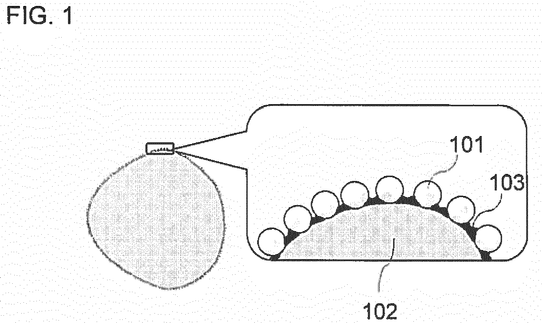

FIG. 1 shows a schematic view of a photocatalyst particle according to the embodiment.

### DETAIL DESCRIPTION OF THE EMBODIMENT

Hereinafter, the embodiment of the present invention will be described with reference to the drawing. United States Patent No. 9,290,394, United States Patent Application Publication No. 2014/0151301, and United States Patent Application Publication No. 2014/0151302 are incorporated herein by reference.

FIG. 1 shows a schematic view of a photocatalyst particle according to the embodiment. Titanium dioxide particles 101 are adsorbed on a part of an external surface of a zeolite particle 102. See United States Patent No. 9,290,394. In other words, the titanium dioxide particles 101 are in physically direct contact with a part of the external surface of the zeolite particle 102. As disclosed in United States Patent No. 9,290,394, titanium dioxide particles decompose an organic compound. As disclosed in United States Patent Application Publication No. 2014/0151302, titanium dioxide particles detoxify hexavalent chrome ions contained in an aqueous solution. As disclosed in United States Patent Application Publication No. 2014/0151301, titanium dioxide particles detoxify arsenic contained in an aqueous solution. Zeolite particles are porous. The zeolite particles include an external surface and an internal surface. As shown in FIG. 1, an external surface of the zeolite particle means a surface itself of the zeolite particle. On the other hand, an internal surface (not shown) of the zeolite particle means a surface of a framework formed in a porous zeolite particle.

A carbon layer 103 coats a part of the external surface of the zeolite particle 102. Note that the carbon layer 103 does not coat a part of the external surface of the zeolite particle 102 on which the titanium dioxide particles 101 have been adsorbed. In other words, the carbon layer 103 coats a part of the external surface of the zeolite particle 102 other than the part of the external surface of the zeolite particle 102 on which the titanium dioxide particles 101 have been adsorbed. Hereinafter, a part of the external surfaces of the titanium dioxide particles 101 which has been coated with the carbon layer 103 is referred to as "coated part".

The carbon layer 103 is in contact with the part of the external surfaces of the titanium dioxide particles 101. As is clear from the inventive example which will be described later, even when the photocatalyst particle is immersed in an alkaline aqueous solution, such a carbon layer 103 (especially, the part of the carbon layer 103 which is in contact with the part of the external surfaces of the titanium particles 101) tightly binds the titanium dioxide particles 101 onto the external surface of the zeolite particle 102.

As shown in FIG. 1, the other part of the external surface of the titanium dioxide particles 101 which is not in contact with the carbon layer 103 is exposed on a surface of the photocatalyst particle and is not coated by the carbon layer 103. Hereinafter, the part of the external surfaces of the titanium dioxide particles 101 which has not coated with the carbon layer 103 is referred to as "exposed part".

In case where the coated part is absent, as is clear from the comparative example which will be described later, the titanium dioxide particles 101 are desorbed from the zeolite particle 102 in an alkaline aqueous solution. On the other hand, in case where the exposed part is absent, the titanium dioxide particles 101 fail to serve, since light is not incident on the titanium dioxide particles 101.

In a composite photocatalyst particle used in the method of the present embodiment, the titanium dioxide particles 101 are in direct contact with the zeolite particle 102 without passing through a thin film and are bound by the carbon layer 103. Therefore, in the present photocatalyst particle, almost all of the surface activity sites that titanium dioxide particles 101 have can be used effectively, and photocatalytic activity equivalent to that of nanometer-order titanium dioxide particles can be maintained. As a result, the photocatalytic activity of the photocatalyst particle is about 8 times higher than that of the photocatalysts produced by the binder process and the sol gel process.

In the present embodiment, first, a method for fabricating a composite of the zeolite particle 102 and titanium dioxide particles 101 will be described. Zeolite particles 102 and titanium dioxide particles 101 are mixed with each other at a specified weight ratio in pure water or water close to pure water, and the mixed solution is immediately subjected to an ultrasonic dispersion process to allow the titanium dioxide particles 101 to be adsorbed on the surfaces of the zeolite particle 102 so that the titanium dioxide particles 101 are immobilized directly on the surfaces of the zeolite particles 102. By changing the weight ratio, a coating ratio of the titanium dioxide particles 101 on the surface of the zeolite particle 102 is changed. Since the titanium dioxide particles 101 are immobilized on at least a part of the surface of the zeolite particles 102, the present composite particle has a function as photocatalyst. The purpose of the ultrasonic process is to disperse, by force, the titanium dioxide particles 101 condensed intrinsically in water in the unit of hundreds of particles and to make it easy for the titanium dioxide particles 101 to be immobilized on the surfaces of the zeolite particles 102. As for the ultrasonic dispersion process time, about 1 hour is desirable. Once adsorbed and immobilized on the surfaces of the zeolite particles 102, the titanium dioxide particles 101 are hardly desorbed from the surfaces of the zeolite particles 102 in a neutral aqueous solution owing to the electrostatic attraction between the titanium dioxide particles 101 and the zeolite particles 102.

Although the above-mentioned synthesis of the titanium dioxide composite catalyst can be performed also in pollutant-containing water to be treated, synthesizing the titanium dioxide composite catalyst in advance in pure water or water close to pure water can make a better result of reproducibility. In order to immobilize the titanium dioxide particles 101 on the surfaces of the zeolite particles 102, it is desirable that the zeolite particles 102 are subjected to an activation treatment in an acid aqueous solution in advance. Zeolite contains silica and alumina as a basic skeleton. From another viewpoint, it can also be said that zeolite contains (SiO₄)⁴⁻ and (AlO₄)⁵⁻ as a basic unit. The above-mentioned treatment in the acid aqueous solution allows only the alumina portions (Al portions) of zeolite to be dissolved, making it possible to introduce a larger amount of active sites for adsorbing titanium dioxide directly into the basic skeleton of the zeolite. The zeolite particles 102 having these active sites allow a larger amount of titanium dioxide particles 101 to be adsorbed and immobilized on their surfaces. However, the acid solvent reduces the electrostatic attraction between the titanium dioxide particles 101 and the zeolite particles 102. Thus, it is desirable to perform the activation treatment of the zeolite particles 102 in the acid aqueous solution prior to the synthesis of the titanium dioxide composite catalyst.

A crystal of the titanium dioxide particles 101 may be anatase-type, rutile-type, or brookite-type. From the viewpoint of high photocatalyst function, an anatase-type crystal is preferable. Each of the titanium dioxide particles 101 has a particle diameter of not less than 1 nanometer and not more than 1,000 nanometers. Each of the titanium dioxide particles 101 has a preferable particle diameter of not less than 1 nanometer and not more than 100 nanometers. Suitable titanium dioxide particles 101 are available from Degussa AG as a brand name "P25". The average particle diameter is defined as the mean value of major and minor axes of the titanium dioxide particles 101. In a case where the titanium dioxide particles 101 have an average particle diameter of less than 1 nm, the catalyst activity of the titanium dioxide particles 101 is lowered due to quantum size effect. On the other hand, in a case where titanium dioxide particles 101 have an average particle diameter of more than 100 nm, gravitational force acting on the titanium dioxide particles 101 is greater than force acting between the titanium dioxide particles 101 and the zeolite particle 102. For this reason, the binding of the titanium dioxide particles 101 to the zeolite particle 102 is unstable. This causes the titanium dioxide particles 101 to be desorbed easily from the external surface of the zeolite particle 102.

The zeolite particles 102 used in the present embodiment are a porous inorganic compound containing silica and alumina as a basic skeleton. From another viewpoint, it can also be said that the zeolite particles 102 used in the present embodiment are a porous inorganic compound containing (SiO₄₎⁴⁻ and (AlO₄)⁵⁻ as a basic unit. The sedimentation performance of the photocatalyst particles is affected by the ratio of the silica and alumina composing the zeolite in the step of separating the solid-phase photocatalyst particles from the liquid-phase treated water after the purification of the pollutant-containing aqueous solution through photocatalyst reaction. Only in the cases where zeolite particles having a silica/alumina ratio of five or more is used as a support material, the titanium dioxide particles can be bound thereto stably. The reason is because the after-mentioned bond occurs more easily between the titanium dioxide particles 101 and the zeolite particle 102. Therefore, the titanium dioxide particles 101 can be used in neutral water for a longer period of time without being desorbed from the zeolite particle 102. The crystal system of the zeolite particle 102 to serve as a support material is not particularly limited. Zeolite particle such as common faujasite type and MFI type zeolite particles, can be used,

Next, a method for forming the carbon layer 103 on the surfaces of the composite particles of the titanium dioxide particles 101 and the zeolite particle 102 will be described. The composite particles are loaded into an electric furnace in which an atmosphere therein is changeable. Then, the composite particles are heated to 300 - 800 degrees Celsius in an inert gas such as nitrogen or argon. Subsequently, a gaseous mixture of an organic gas and a carrier gas (namely, an inert gas) is supplied into electric furnace. In this way, the carbon layer 103 is formed each on the surfaces of the composite particles. After the carbon layer 103 is formed, an inert gas is supplied into the electric furnace again, and the temperature in the electric furnace is lowered. In this way, photocatalyst particles each composed of the titanium dioxide particles 101, the zeolite particle 102, and the carbon layer 103 is provided. An example of the organic gas is a hydrocarbon gas containing alkene such as propylene or alkane such as methane. Another example is a gas provided by bubbling an inert gas with alcohol such as methanol or ethanol. The hydrocarbon gas may contain impurities such as nitrogen. In this case, the carbon layer 103 is doped with impurities. As a result, the property of the surface of the carbon layer 103 may be changed. In order to form the carbon layer 103 on the surface of the composite with the hydrocarbon gas, the hydrocarbon gas is required to be heated to not less than 300 degrees Celsius. In light of dehydrogenization, it is preferable that the hydrocarbon gas is heated to not less than 400 degrees Celsius. An anatase-type titanium dioxide photocatalyst has higher activity than a rutile-type one. On the other hand, the heat treatment over 800 degrees Celsius changes the crystal of the titanium dioxide to be rutile-type. Therefore, it is desirable that the composite is heated at a temperature of not more than 800 degrees Celsius.

During the treatment of the composite of the titanium dioxide particles 101 and the zeolite particle 102 by a chemical vapor deposition method, the carbon layer is formed faster in the inside of the fine pores near the external surface of the zeolite particle 102 than on the surface of the titanium dioxide particle 101. As a result, the carbon layer 103 is formed so as to coat an interspace between adjacent two titanium dioxide particle 101 located on the external surface of the zeolite particle 102. This is caused by that molecules of the organic gas is easily reserved in the fine pores in the zeolite particle 102, since the zeolite particle 102 is a porous material having fine pores each having a diameter of 0.2 - 1.0 nm. In addition, there are Broenstead acid points and Lewis acid points on the surface and in the pores of the zeolite particle 102. Since these acid points serve as adsorption points of an organic gas, the formation of the carbon layer on the surface and in the pores of the zeolite particle 102 is promoted. On the other hand, a carbon layer (not shown) is formed also on surfaces of the titanium dioxide particles 101, although its formation rate is low. For this reason, a part of the surface of the titanium dioxide particle 101 may be covered with the carbon layer (not shown). However, at least a part of the surfaces of the titanium dioxide particles 101 are exposed without being covered with the carbon layer (not shown).

As described above, the carbon layer is formed faster in the inside of the fine pores near the external surface of the zeolite particle 102 than on the surface of the titanium dioxide particle 101. For this reason, a carbon layer having an excessive thickness which lowers the function of the photocatalyst particles is not formed on the surfaces of the titanium dioxide particles 102. Electrons excited by irradiation of ultraviolet light onto the titanium dioxide particles 101 can migrate to the part of the carbon layer 103 which is in contact with the surfaces of the titanium dioxide particles 101 which functions as photocatalyst. For this reason, recombination of the excited electrons and holes are suppressed, and photocatalyst activity is improved. Furthermore, since a Ti-O-C bond is formed in the photocatalyst particle according to the embodiment, a bandgap is small. For this reason, the responsiveness to the visible light is improved. Therefore, the photocatalyst particles according to the embodiment can be used for photocatalyst water purification system using sunlight.

When the composite photocatalyst of the titanium dioxide particles 101, the zeolite particle 102, and the carbon layer 103 (namely, the photocatalyst particles according to the embodiment) is heated under an atmosphere containing oxygen in an electric furnace or a thermogravimetric analysis apparatus, a sudden decrease in the weight of the photocatalyst particles is observed from around 400 degrees Celsius. This is because the carbon layer 103 is burned.

Desirably, the carbon layer 103 has a thickness of not less than 1 nm and not more than 2 nm. When the carbon layer 103 is too thin, the coated part is small. Therefore, the carbon layer 103 fails to tightly bind the titanium dioxide particles 101 to the external surface of the zeolite particle 102. On the other hand, when the carbon layer 103 is too thick, the exposed part is small. Therefore, the titanium dioxide particles 101 fail to be irradiated sufficiently with light.

### EXAMPLES

Hereinafter, the present invention will be described in more detail with reference to the following examples.

### (Inventive example 1)

First, a method for fabricating composite particles of the titanium dioxide particles 101 and the zeolite particles 102 according to United States Patent No. 9,290,394 will be described. As the zeolite particles, HY type zeolite particles (faujasite type zeolite particles produced by Zeolyst) having an average particle diameter of 5.0 µm and a Si/Al ratio of 15 were used. The zeolite particles 102 were immersed in a 0.1 mol/L hydrochloric acid aqueous solution and stirred in an ultrasonic washer for 60 minutes, and then only the zeolite particles 102 were desorbed and recovered from the water by suction filtration. The resulted powder was rinsed well with water 3 times to wash off acid and it was dried. Titanium dioxide particles 101 (1.0 gram, P25 produced by Degussa AG) having a average particle diameter of 25 nm and 3.0 grams of the HY type zeolite particles treated with the hydrochloric acid aqueous solution were added into ultrapure water (2 liters) having specific resistance of not less than 18.2 megohm. This solution was stirred using an ultrasonic washing machine for 1 hour.

At a pH range close to neutrality, since the zeta potential of the surface of the titanium dioxide particle 101 is positive and the zeta potential of the surface of the zeolite particle 102 is negative, these particles dispersed in the water are adsorbed onto each other due to electrostatic interaction. As a result, the zeolite particle 102 functions as a core and the titanium dioxide particles 101 adsorb onto the surface of the zeolite particle 102. In this way, the composite particle of the titanium dioxide particles 101 and the zeolite particle 102 is provided. The dispersion liquid in which the composite particles are dispersed is filtered using a membrane filter having a pore diameter of 1 micrometer and a dry aspirator. The residual substance of the composite particles was moved to a flat petri dish. Finally, the composite particles were dried at a temperature of 90 degrees Celsius using a constant temperature bath for 12 hours.

Then, a method for coating the carbon layer 103 on the surface of the composite particle by a thermochemistry vapor deposition method will be described. The composite particles (0.3 grams) were spread uniformly and thinly on a quartz boat, and then were loaded into a tube furnace. After the atmosphere in the tube furnace was replaced sufficiently with nitrogen, the inside of the tube furnace was heated to 450 degrees Celsius. Then, a gaseous mixture of nitrogen having a flow rate of 36 mL/min and propylene having a flow rate of 62 mL/min was supplied into the tube furnace for 60 minutes. Subsequently, the temperature in the tube furnace was cooled off to room temperature, while only nitrogen gas was supplied into the tube furnace. In this way, the composite particles each coated with the carbon layer 103 were provided. In other words, the photocatalyst particles each formed of the composite of the titanium dioxide particles 101, the zeolite particle 102, and the carbon layer 103 as shown in FIG. 1 were provided.

The thus-provided photocatalyst particles (5 mg) were added to an aqueous solution (5 mL) prepared with ultrapure water and a sodium hydroxide aqueous solution. The prepared aqueous solution had a pH of 12. A supersonic wave was applied to the photocatalyst particles for ten minutes. In this way, the photocatalyst particles were dispersed in the aqueous solutions. The dispersion liquids were shaken well. The dispersion liquid (3 mL) was supplied to a plastic disposable cell. Then, a particle size distribution of the dispersion liquid was measured using a particle size distribution meter (product of Otsuka Electronics Co. Ltd., trade name: ELSZ-2000) by a dynamic light scattering method. The particle size distribution was analyzed by a MARQUARDT method using the software attached to the particle size distribution meter. Similarly, the photocatalyst particles (5 mg) were also added to ultrapure water (5 mL) and dispersed in the ultrapure water. Needless to say, ultrapure water has a pH of 7. The particle size distribution of this dispersion liquid having a pH of 7 was also measured similarly.

In the aqueous solution having a pH of 12, the particle size of the photocatalyst particle was approximately 700 nm. In the ultrapure water, the particle size of the photocatalyst particle was about 800 nm. The primary particle diameter of the titanium dioxide particle 101 was approximately 25 nm. One zeolite particles 102 had an approximately 200 times larger average particle diameter than one titanium dioxide particle 101. The weight ratio of the titanium dioxide particles 101 to the zeolite particle 102 was 1:3. It was estimated from the density of the titanium dioxide particle 101 and the zeolite particle 102 that the number of the titanium dioxide particles 101 adsorbed on the surfaces of the zeolite particles 102 was approximately 1,400,000 times as large as the number of zeolite particles 102.

In case where a very small amount of the titanium dioxide particles 101 are desorbed from the zeolite particle 102, the particle size distribution of the dispersion liquid is changed, the present inventors believe. This is because aggregate of the desorbed titanium dioxide particles 101 is formed and the aggregate is detected using the particle size distribution meter. The aggregate of the titanium dioxide particles 101 has a particle diameter of less than 500 nm. However, in the inventive example 1, even in the aqueous solution (pH: 12) and the ultrapure water (pH: 7), the particle size distribution meter did not detect a particle having a particle diameter less than 500 nm. This means that the titanium dioxide particles 101 were not desorbed from the zeolite particles 102.

### (Comparative example 1)

In the comparative example 1, an experiment similar to the inventive example 1 was conducted, except that the carbon layer 103 was not formed. In other words, in the comparative example 1, composite particles of the titanium dioxide particles 101 and the zeolite particles 102 were added to the ultrapure water (pH: 7) and the sodium hydroxide aqueous solution (pH: 12). In the comparative example 1, the particle size distribution meter did not detect a particles having a particle diameter of less than 500 nm in the ultrapure water (pH: 7). However, the particle size distribution meter detected particles each having a particle diameter of 70 nm in the alkaline aqueous solution (pH: 12). From this particle size distribution, it was estimated that approximately 25% of the titanium dioxide particles 101 were desorbed from the zeolite particles 101 and that the aggregates each having a particle diameter of 70 nm were formed from the desorbed titanium dioxide particles 101.

As is clear from the comparison of the inventive example 1 to the comparative example 1, the carbon layer 103 prevents the titanium dioxide particles 101 from being desorbed from the zeolite particle 102 in the alkaline aqueous solution.

### INDUSTRIAL APPLICABILITY

The photocatalyst particles according to the present invention can be used for a method for decomposing an organic compound contained in an alkaline aqueous solution. The photocatalyst particles according to the present invention can also be used for a method for converting toxic ions contained in an alkaline aqueous solution into non-toxicity ions.

### REFERENTIAL SIGNS LIST

- 101: Titanium dioxide particle
- 102: Zeolite particle
- 103: Carbon layer

## Claims

1. A photocatalyst particle, comprising:
titanium dioxide particles;
a zeolite particle; and
a carbon layer,
wherein
the titanium dioxide particles are adsorbed on a part of an external surface of the zeolite particle;
the carbon layer coats a part of an external surface of the zeolite particle other than the part of the external surface of the zeolite particle on which the titanium dioxide particles are adsorbed;
the carbon layer is in contact with a part of surfaces of the titanium dioxide particles; and
at least a part of the other part of the surfaces of the titanium dioxide particles is not coated with the carbon layer and are exposed on a surface of the photocatalyst particle.

2. A method for decomposing an organic compound contained in an aqueous solution, the method comprising:
(a) adding the photocatalyst particle of Claim 1 to the aqueous solution; and wherein
the aqueous solution is alkaline;
(b) irradiating the aqueous solution with light having a wavelength of not less than 200 nm and not more than 400 nm, while the photocatalyst particle is stirred in the aqueous solution, to decompose the organic compound.

3. A method for converting toxic ions contained in an aqueous solution into non-toxic ions, the method comprising:
(a) adding the photocatalyst particle of Claim 1 to the aqueous solution; and wherein
the aqueous solution is alkaline;
(b) irradiating the aqueous solution with light having a wavelength of not less than 200 nm and not more than 400 nm, while the photocatalyst particle is stirred in the aqueous solution, to convert the toxic ions contained in the aqueous solution into the non-toxic ions.

4. The method according to Claim 3, wherein
the toxic ions are at least one kind of ions selected from the group consisting of Cr⁶⁺ and As³⁺.

5. The method according to Claim 4, wherein
the toxic ions are Cr⁶⁺ and
the non-toxic ions are Cr³⁺.

6. The method according to Claim 4, wherein
the toxic ions are As³⁺ and
the non-toxic ions are As^{5*}.

7. A method for fabricating a photocatalyst particle, the method comprising:
(a) forming, on a surface of a composite particle of titanium dioxide particles and a zeolite particle, a carbon layer by a chemical vapor deposition method under an atmosphere containing an inert gas and a hydrocarbon gas to fabricate the photocatalyst particle comprising the titanium dioxide particles, the zeolite particle and the carbon layer;
wherein
the titanium dioxide particles are adsorbed on a part of an external surface of the zeolite particle;
the carbon layer coats a part of an external surface of the zeolite particle other than the part of the external surface of the zeolite particle on which the titanium dioxide particles are adsorbed;
the carbon layer is in contact with a part of surfaces of the titanium dioxide particles; and
the other part of the surfaces of the titanium dioxide particles are not coated with the carbon layer and are exposed on a surface of the photocatalyst particle.
